## Europäisches Patentamt
## European Patent Office
## Office européen des brevets

(19)

(11) Veröffentlichungsnummer : **0 045 750**
**B1**

(12) **EUROPÄISCHE PATENTSCHRIFT**

(45) Veröffentlichungstag der Patentschrift : 21.03.84

(21) Anmeldenummer : **81900055.5**

(22) Anmeldetag : **22.12.80**

(86) Internationale Anmeldenummer : **PCT/CH 80/00158**

(87) Internationale Veröffentlichungsnummer : **WO WO/81022 (20.08.81 Gazettee 81/20)**

(51) Int. Cl.³ : **B 23 D 45/12**, B 23 G 1/52, B 23 P 23/02

(54) **EINRICHTUNG ZUM TRENNEN UND GEWINDESCHNEIDEN VON ROHREN.**

(30) Priorität : **13.02.80 CH 1166/80**

(43) Veröffentlichungstag der Anmeldung : **17.02.82 Patentblatt 82/07**

(45) Bekanntmachung des Hinweises auf die Patenterteilung : **21.03.84 Patentblatt 84/12**

(84) Benannte Vertragsstaaten : **AT CH DE FR GB LI LU NL SE**

(56) Entgegenhaltungen :
**DE-A- 1 777 391**
**DE-A- 2 157 787**
**FR-A- 2 279 512**
**GB-A- 674 650**
**GB-A- 2 025 279**
**US-A- 3 332 095**

(73) Patentinhaber : **GEORG FISCHER AKTIENGESELL-SCHAFT**
**Mühlentalstrasse 105**
**CH-8201 Schaffhausen (CH)**

(72) Erfinder : **WUCHNER, Xaver**
**Neunkircherstrasse 8**
**D-7893 Jestetten (DE)**

Einrichtung zum Trennen und Gewindeschneiden von Rohren

Die Erfindung betrifft eine Einrichtung zum Trennen und Gewindeschneiden von Rohren, mit je einer mit einem Antriebsmotor versehenen Trenn- und Schneidevorrichtung, die beide auf ein Gestell montierbar und in von einer Person leicht tragbaren Einheiten zerlegbar sind, wobei eine Klemmvorrichtung zur Halterung des Rohres vorgesehen ist und wobei die Schneidevorrichtung zwischen einer Trenn- und einer Schneidstellung schwenkbar ist.

Bekannt ist eine Einrichtung der eingangs genannten Art, (FR-A-22 79 512) bei welcher die Klemmvorrichtung auf Führungen axial verschiebbar und die schwenkbare Gewindeschneidvorrichtung zwischen der Klemm- und der Trennvorrichtung angeordnet ist. Damit die Einspannstelle des Rohres zum Abtrennen einigermassen nahe an die Trennvorrichtung gebracht werden kann, sind grosse Verschiebewege und dafür lange Führungen für die Klemmvorrichtung erforderlich, wodurch eine grosse Abmessungen aufweisende und dadurch schwere, unhandliche und nicht leicht demontierbare Einrichtung entsteht.

Neben dem Ausschwenken der Gewindeschneidvorrichtung muss für den Trennvorgang auch die Klemmvorrichtung verstellt werden, was eine zeitaufwendige Arbeitsweise ergibt.

Nachteilig ist ausserdem, dass durch die bewegliche Klemmeinrichtung das Rohr beim Gewindeschneiden und Trennen zum Rattern neigt, wodurch unsaubere Schnitte und Lärm entstehen.

Aufgabe der Erfindung ist die Schaffung einer Einrichtung zum Rohrtrennen und Gewindeschneiden, welche die vorgenannten Nachteile nicht aufweist und eine kompakte und leichte Bauweise aufweist.

Dabei soll die Umstellung von Trenn- auf Schneidebetrieb und umgekehrt in kürzester Zeit durchführbar sein, indem für diese Umstellung nur eine einfache Handbewegung erforderlich ist.

Die Trennvorrichtung soll derart angeordnet sein, dass ein einwandfreier Schnitt entsteht, so dass keine Rückstände am abgetrennten Rohrstück entstehen, die eine Nachbearbeitung erfordern.

Diese Aufgabe ist mittels der Lehre gemäss dem gekennzeichneten Teil des Anspruches 1 gelöst.

Ausführungsformen dieser Lehre sind in den nachfolgenden, abhängigen Ansprüchen umschrieben.

Durch die erfindungsgemässe Anordnung der Klemmvorrichtung zwischen der Gewindeschneid- und der Trennvorrichtung kann diese fest mit dem Grundkörper verbunden werden, wodurch folgende Vorteile entstehen :

— Kompakte und leichte Bauweise sowie eine schnelle Zerlegbarkeit der Einrichtung in leicht transportierbare Teile.

— Eine starre Halterung des Rohres wodurch ein einwandfreier Schnitt ohne sonst erforderliche Nachbearbeitung entsteht.

— Der Abstand der Klemmeinrichtung zur Trenneinrichtung ist sehr kurz, so dass das Rohr beim Trennen fest und geräuscharm gehalten wird.

— Der erforderliche Verschiebeweg der Gewindeschneideinrichtung braucht nur so gross zu sein, wie es die Gewindelänge erfordert.

— Die Einrichtung ist auch zum Trennen und Schneiden von kurzen Rohren geeignet.

— Die Umstellung von Schneide- auf Trennbetrieb erfolgt durch ein einfaches Ausschwenken der Schneidevorrichtung, wordurch das Einsetzen des zu trennenden Rohres nicht beeinträchtigt wird. Bei der Rückstellung von Trenn- auf Schneidebetrieb wird die Schneidevorrichtung wieder eingeschwenkt.

Aus den abhängigen Ansprüchen ergibt sich der Vorteil, dass die zwischen den Füssen der Einrichtung angeordnete Platte die Aufbewahrung von Schneidemittel, Werkzeugen, Teilen, usw. erleichtert.

Nachfolgend wird ein Ausführungsbeispiel der erfindungsgemässen Einrichtung anhand der Zeichnung näher erläutert.

Es zeigen :

Figur 1 eine Seitenansicht der Einrichtung mit Gestell,

Figur 2 eine Stirnansicht der Einrichtung nach Fig. 1 in Richtung des Pfeiles II, ohne Gestell,

Figur 3 eine Draufsicht der Einrichtung nach Fig. 1, ohne Gestell,

Figur 4 eine Stirnansicht der Einrichtung nach Fig. 1, ohne Gestell und Trennvorrichtung in Richtung des Pfeiles IV, und

Figur 5 eine detaillierte Darstellung der Schwenkhebelbefestigung an der Vorrichtung nach Fig. 2.

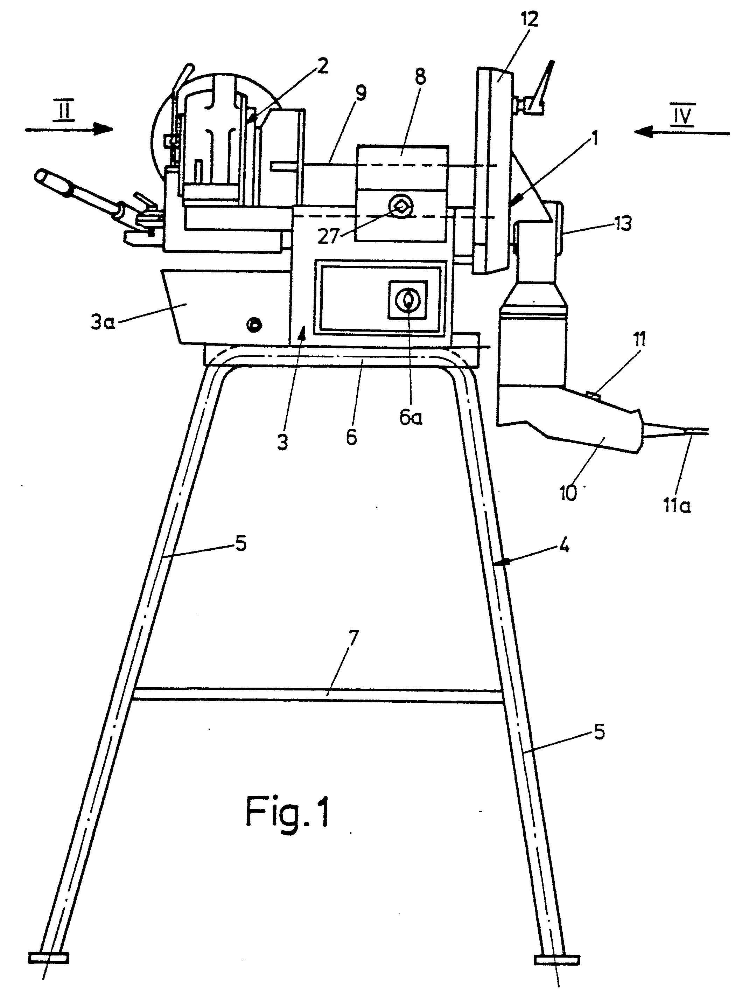

In Fig. 1 ist eine Einrichtung mit einer Rohr-Trennvorrichtung 1, einer Gewinde-Schneidevorrichtung 2 für Rohre, einem Grundkörper 3 und einem Gestell 4 dargestellt. Das Gestell 4 hat vier Füsse 5, die von zwei gespreizt u-förmig gebogenen Rohren gebildet werden, die oben vom Grundkörper 3 zusammengehalten werden, der mit den mittleren Schenkeln 6 verschraubt ist. Etwa auf halber Höhe sind die Füsse 5 mittels einer Auflageplatte 7, z. B. durch Schrauben oder Haken, miteinander verbunden. Die Auflageplatte 7 dient zur Aufnahme von Werkzeug und Teilen. Das Gestell selbst ist schnell zerleg- und zusammenstellbar. Anstelle des Gestells kann aber auch ein beispielsweise an der Montagestelle vorhandener Tisch verwendet werden, so dass der Transport des Gestells vermieden werden kann.

Die beiden Vorrichtungen 1 und 2 sind am Grundkörper 3 wegnehmbar befestigt, so dass sie nach Belieben entfernt werden können, sofern die Einrichtung nur zum Rohrtrennen oder Gewindeschneiden verwendet wird. Die lösbare Be-

festigung hat zudem den Vorteil, dass die beiden Vorrichtungen 1, 2 und der Grundkörper 3 von einander und vom Gestell 4 getrennt transportiert werden können.

Zwischen den beiden Vorrichtungen 1, 2 befindet sich ein Schraubstock 8 zur Halterung des Rohres 9 während des Schneide- oder Trennvorganges.

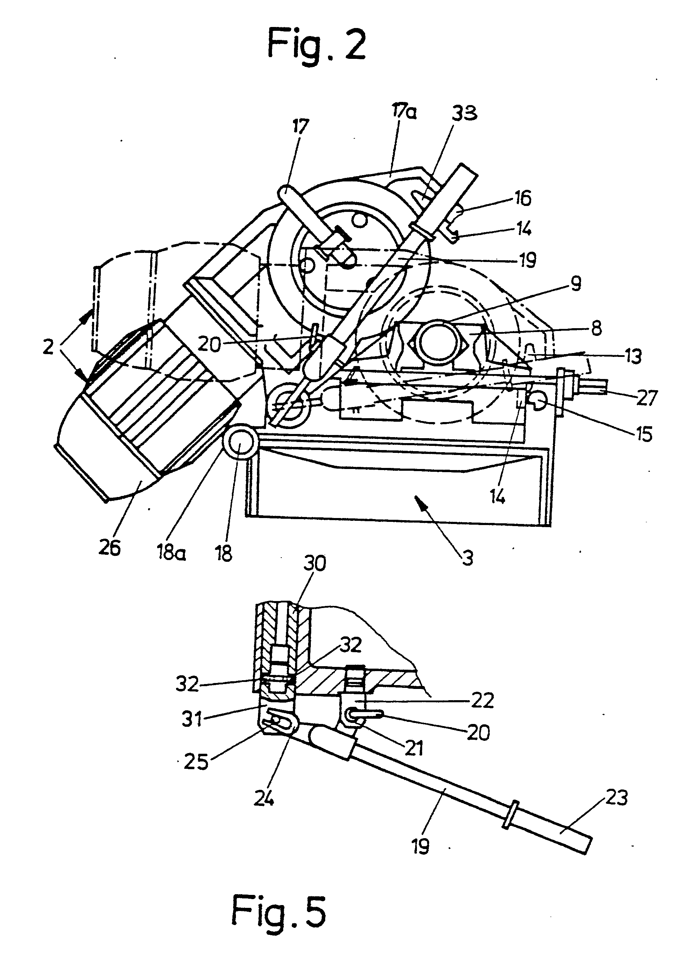

In Fig. 2 ist eine Stirnansicht der Schneidevorrichtung 2 in ausgeschwenkter Lage für den Trennvorgang dargestellt. Ferner ist diese Vorrichtung 2 in eingeschwenkter Lage für den Schneidevorgang gestrichelt eingezeichnet. Dieser Schwenkvorgang ist notwendig, um die Schneidevorrichtung aus der Bahn eines langen Rohres 9 zu entfernen, das von der Trennvorrichtung 1 auf eine passende Länge abzuschneiden ist. Da die Trennvorrichtung 1 das Schneiden des Gewindes nicht stört, ist sie normalweise nicht aus der Bahn des Rohres schwenkbar. Beim Schneidevorgang kann sich das Rohr durch die Trennvorrichtung 1 erstrecken, die mit einem durchgehenden Loch versehen ist. Beim Trennen wird ein kleines Sägeblatt radial nach innen gedrückt und in eine kreisförmige Bahn rund um das Rohr 9 bewegt. Dabei wird die Rohrwandung durch einen Planetschnitt um den ganzen Rohrumfang getrennt.

Für den Trennvorgang wird vorzugsweise eine Sägeblatt verwendet, das einen Schnitt ohne Rückstände gewährleistet, so dass eine Nachbearbeitung der Rohrenden nach dem Trennvorgang nicht erforderlich ist.

Beim Trennvorgang wird ein nach unten hängender Pistolengriff 10 mit einer Hand gefasst und ein darin befindlicher Schalter 11 betätigt, mit dem das Sägeblatt eingeschaltet wird. Dann wird das in einem Gehäuse 12 befindliche Sägeblatt mittels des Pistolengriffes 10 radial gegen das Rohr 9 gedrückt und der Pistolengriff 10 um eine Achse 13 planetenartig rund um das Rohr 9 geführt bis es durchtrennt ist. Im Kabel 11a der Trennvorrichtung 1 sind Schleifkontakte angeordnet, damit das Kabel 11a beim Trennen nicht verdreht wird.

Damit ausreichend Platz für die zu trennende Rohre vorhanden ist, wird die Schneidevorrichtung 2 beim Trennvorgang zur Seite geschwenkt, wie dies in Fig. 2 gezeigt ist. Dieser Schwenkvorgang wird durch Anfassen eines Griffes 17a am Motorgehäuse durchgeführt, wobei der Schneidekopf gehoben wird. In der ausgeschwenkten, wie auch in der eingeschwenkten Lage bleibt die Schneidvorrichtung 2 wegen des Eigengewichtes ohne Hilfsmittel stehen. Es können aber schnappschlossartige Haltemittel, die von Hand durch leichtes Drücken lösbar sind, in den beiden Stellungen der Schneidvorrichtung 2 vorgesehen werden. In der gezeigten Ausführung (Fig. 2) besteht dieses Schnappschloss aus einem durch eine Feder vorgespannten Hebel 33 mit einem Haken 14, der in einen Sperrkörper 15 eingreift. Damit die Schneidevorrichtung 2 beim Einschwenken nicht hart gegen die Auflage schlägt, ist ein Belag, z. B. aus Kunststoff, an der Stelle 16 vorgesehen. In ausgeschwenkter Lage der Schneidevorrichtung 2 ist ebenfalls ein Dämpfer, z. B. ein Weichgummirohr 18a, an einer Welle 18, zur Verhinderung eines harten Anschlages vorgesehen.

Am stirnseitigen Ende der Schneidvorrichtung 2 befindet sich ein Hebel 17 zum Spannen des Schneidkörpers nach dem Auslösen. Der Schneidkörper ist durch einen Bajonettverschluss mit der Schneidvorrichtung verbunden und kann im Laufe von wenigen Sekunden ausgewechselt werden.

Die Schneidevorrichtung 2 ist um ein Rohr 30 schwenkbar, das auch als Führung beim Vorwärtsschieben der Vorrichtung 2 (Fig. 5) beim Gewindeschneiden mittels eines Hebels 19 dient, der mittels eines Hakens 20 in ein Loch 21 in einer Platte 22 an der Vorrichtung 2 eingreift. Das vom Griff 23 entfernte Ende 24 des Hebels 19 ist gabelförmig ausgebildet und greift an einen Zapfen 25 in einem Gabelkopf 31 an, der drehbar im Rohr 30 angeordnet ist (Fig. 5). Zur Halterung des Gabelkopfes 31, der drehbar ist, gegen eine axiale Verschiebung ist das Rohr 30 mit zwei Löchern versehen, in die Gewindestifte 32 eingesetzt sind, die sich in das Rohrinnere erstrecken und dabei in eine Rille im Gabelkopf 31 eingreifen. Somit kann die Schneidevorrichtung 2 mittels des Hebels 19 in der axialen Richtung des Rohres 30 verschoben und relativ zu diesem Rohr 30 verschwenkt werden, wobei die beiden Bewegungen mittels des Hakens 20 erzeugt werden.

Wenn die erwünschte Gewindelänge erreicht ist, werden die Schneidebacken automatisch radial nach aussen bewegt und der Schneidevorgang abgestellt.

Zum sicheren Auslösen auch beim Gewindeschneiden an kurzen Rohren 9 ist ein Endschalter 8a z.B. am Schraubstock 8 angeordnet.

Als Antriebsmotor 26 für die Schneidevorrichtung 2 ist ein Drehstrommotor handelsüblicher Art vorgesehen. Derartige Motoren laufen sehr geräuscharm und sind somit akustisch umweltfreundlich.

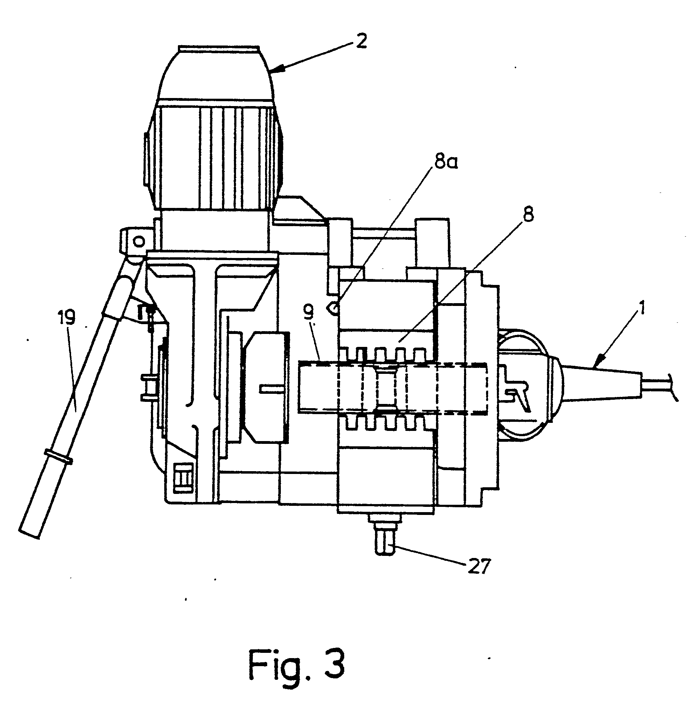

Aus der Draufsicht nach Fig. 3 geht besonders deutlich hervor, dass der Abstand zwischen dem Schraubstock 8 und der Trennvorrichtung 1 sehr gering ist. Infolgedessen ist ein einwandfreies und vibrationsfreies Trennen möglich. Die Anordnung des Schraubstockes 8 führt somit ferner zu einem besonders geräucharmen Schneidevorgang. Der Schraubstock 8 wird mittels eines Schlüssels betätigt, der auf einen Zapfen 27 mit viereckigem Querschnitt aufsetzbar ist.

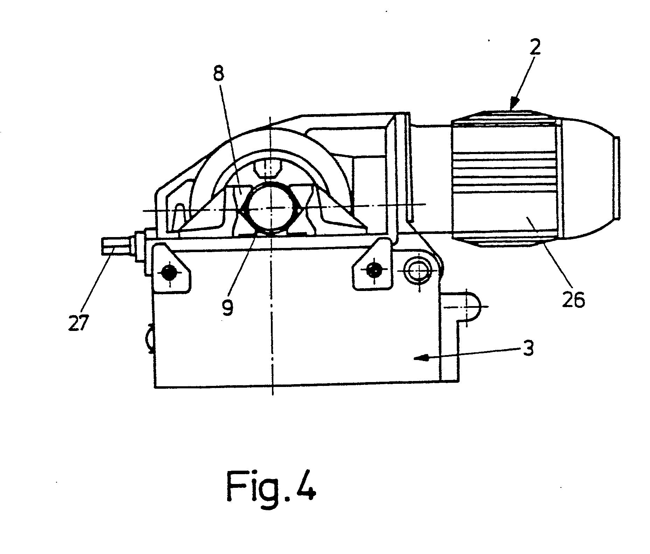

In Fig. 4 ist eine Stirnansicht in der Richtung IV in Fig. 1, jedoch in einer Ausführung mit entfernter Trennvorrichtung 1 dargestellt. Diese Ausführung wird dann verwendet, wenn die Einrichtung während einer längeren Dauer nur zum Gewindeschneiden verwendet wird.

Anderseits kann die Schneidevorrichtung 2 entfernt werden, sofern die Einrichtung während längerer Dauer nur zum Trennen benutzt wird.

In Fig. 1 ist ein Schalter 6a für die Stromzufuhr dargestellt. Dieser Schalter 6a hat eine mittige Stufe (wie dargestellt) und zwei seitlichen Stufen. In der mittigen Stufe ist die Trennvorrichtung 1 eingeschaltet, die nun mittels des Schalters 11 betätigbar ist. In den beiden äusseren Stufen ist die Schneidevorrichtung 2 jeweils für Links- oder Rechtsgewinde eingeschaltet, während die Stromzufuhr zur Trennvorrichtung 1 unterbrochen ist. In der Weise ist gewährleistet, dass nicht sowohl die Trennvorrichtung 1 als auch die Schneidevorrichtung 2 gleichzeitig eingeschaltet werden können.

Zur Spühlung und Kühlung der Schneidstelle sind ein Schneidmittel und eine Handpumpe vorgesehen, das am Boden in einem Spannbehälter 3a, unter einem Sieb aufbewart wird.

**Ansprüche**

1. Einrichtung zum Trennen und Gewindeschneiden von Rohren, mit je einer mit einem Antriebsmotor (26) versehenen Trenn- (1) und Schneidevorrichtung (2), die beide auf ein Gestell (4) montierbar und in von einer Person leicht tragbaren Einheiten zerlegbar sind, wobei eine Klemmvorrichtung (8) zur Halterung des Rohres (9) vorgesehen ist und wobei die Schneidevorrichtung (2) zwischen einer Trenn- und einer Schneidstellung schwenkbar ist, dadurch gekennzeichnet, dass sich die Klemmvorrichtung (8) von der Trennvorrichtung (1) bis zur Gewindeschneidevorrichtung (2) derart erstreckt, dass der kleinste freie Weg zwischen diesen beiden Vorrichtungen (1, 2) von der Klemmvorrichtung (8) ausgefüllt ist, und dass die Schneidevorrichtung (2) an einem Führungsrohr (30) schwenkbar ist, welches ferner zur Verschiebung dieser Gewindeschneidvorrichtung (2) dient.

2. Einrichtung nach Anspruch 1, dadurch gekennzeichnet, dass das Gestell (4) zwei gespreizt u-förmige Rohre einschliesst und zerlegbar ist, an deren Mittelschenkel (6) ein Grundkörper (3) zur Aufnahme der Trenn- (1) und der Schneidevorrichtung (2) montiert ist.

3. Einrichtung nach Anspruch 2, dadurch gekennzeichnet, dass die als Füsse (5) dienenden, gespreizten Schenkel etwa auf halber Höhe miteinander verbunden sind.

4. Einrichtung nach Anspruch 3, dadurch gekennzeichnet, dass die Verbindung aus einer viereckigen Auflageplatte (7) besteht.

5. Einrichtung nach Anspruch 1, dadurch gekennzeichnet, dass das Gestell (4) ein Tisch ist.

6. Einrichtung nach Anspruch 1 bis 5, dadurch gekennzeichnet, dass der Antriebsmotor (26) der Schneidevorrichtung (2) für geräuscharmen Lauf ausgelegt ist.

7. Einrichtung nach Anspruch 1 bis 6, dadurch gekennzeichnet, dass die Schneidevorrichtung (2) mittels eines Hebels (19) verschiebbar ist, der drehbar im Führungsrohr (30) abgestützt ist.

8. Einrichtung nach Anspruch 7, dadurch gekennzeichnet, dass der Hebel (19) über einen Gabelkopf (31) mit dem Führungsrohr (30) drehbar verbunden ist, der einen sich in das Führungsrohr (30) hinein erstreckenden Zapfen mit einer Umfangsrille aufweist, in die Gewindestifte (32) eingreifen, die in die Rohrwandung eingeschraubt sind.

9. Einrichtung nach Anspruch 8, dadurch gekennzeichnet, dass das äussere Ende des Gabelkopfes (31) mit einem Schlitz versehen ist, in dem das gabelförmige Ende des Hebels (19) mittels eines Stiftes (25) gleitbar gehalten ist.

10. Einrichtung nach Anspruch 9, dadurch gekennzeichnet, dass der Hebel (19) beabstandet vom gabelförmigen Ende, für den Verschiebevorgang mit der Schneidevorrichtung (2) lösbar verbunden ist.

**Claims**

1. Device for cutting and threading pipes having in each case a cutting unit (1) and a threading unit (2), which are provided with a driving motor (26), which can be mounted onto a trestle (4) and which can be disassembled into separate units which can be easily carried by one person, wherein there is provision for a clamping device (8) for the purpose of holding the pipe (9) and wherein the threading unit (2) pivots between a cutting and a threading position, characterised in that the clamping device (8) extends from the cutting unit (1) as far as the threading unit (2) in such a way that the shortest clear path between these two units (1, 2) is filled by the clamping device (8) and in that the threading unit (2) pivots on a guide pipe (30) which serves, furthermore, to shift this threading unit (2).

2. Device according to claim 1, characterised in that the trestle (4) comprises two spread out U-shaped pipes and can be disassembled, a common frame (3) for taking up the cutting unit (1) and the threading unit (2) being mounted on the centre legs (6) of the said pipes.

3. Device according to claim 2, characterised in that the legs, which are spread out and which serve as feet (5), are connected with one another approximately half-way up.

4. Device according to claim 3, characterised in that the connection is made of a square supporting plate (7).

5. Device according to claim 1, characterised in that the trestle (4) is a table.

6. Device according to claims 1 to 5, characterised in that the driving motor (26) of the threading unit (2) is designed to operate with little noise.

7. Device according to claims 1 to 6, characterised in that the threading unit (2) can be shifted by means of a lever (19) which is supported in a rotatable manner in the guide pipe (30).

8. Device according to claim 7, characterised in that the lever (19) is connected in a rotatable manner with the guide pipe (30) by way of a fork head (31) which has a peg extending into the guide pipe (30) and having a peripheral groove into which there engage headless screws (32) which are screwed into the wall of the pipe.

9. Device according to claim 8, characterised in that the outer end of the fork head (31) is provided with a slit in which the forked end of the lever (19) is held in a slidable manner by means of a pin (25).

10. Device according to claim 9, characterised in that the lever (19) remote from the forked end is connected with the threading unit (2) in a detachable manner for the shifting process.

**Revendications**

1. Dispositif pour le tronçonnage et le filetage de tubes, comprenant une tronçonneuse (1) et un appareil de filetage (2) munis chacun d'un moteur d'entraînement (26) qui peuvent être montés tous deux sur un bâti (4), et peuvent être démontés en unités facilement transportables par une personne, un appareil de serrage (8) étant prévu pour tenir le tube (9) et l'appareil de filetage (2) pouvant être basculé entre une position de tronçonnage et une position de filetage, caractérisé en ce que l'appareil de serrage (8) s'étend de la tronçonneuse (1) jusqu'à l'appareil de filetage (2), de telle manière que la plus courte distance libre entre ces deux appareils (1, 2) est comblée par l'appareil de serrage (8) et en ce que l'appareil de filetage (2) est monté pour basculer sur un tube de guidage (30) qui sert en outre pour la translation de cet appareil de filetage (2).

2. Dispositif selon la revendication 1, caractérisé en ce que le bâti (4) comprend deux tubes en forme de U écarté et est démontable, un corps de base (3) destiné à recevoir la tronçonneuse (1) et l'appareil de filetage (2) étant monté sur les branches centrales (6) de ces tubes.

3. Dispositif selon la revendication 2, caractérisé en ce que les branches écartées qui servent de pieds (5) sont liées les unes aux autres à peu près à mi-hauteur.

4. Dispositif selon la revendication 3, caractérisé en ce que la liaison est constituée par une plaque support rectangulaire (7).

5. Dispositif selon la revendication 1, caractérisé en ce que le bâti (4) est une table.

6. Dispositif selon les revendications 1 à 5, caractérisé en ce que le moteur d'entraînement (26) de la tronçonneuse (1) est étudié pour fonctionner sans bruit.

7. Dispositif selon les revendications 1 à 6, caractérisé en ce que l'appareil de filetage (2) peut être déplacé en translation au moyen d'un levier (19) qui est monté rotatif dans le tube de guidage (30).

8. Dispositif selon la revendication 7, caractérisé en ce que le levier (19) est relié de façon rotative, par l'intermédiaire d'une chape (31) au tube de guidage (30) cette chape comprenant un tourillon engagé dans le tube de guidage (30) et muni d'une gorge périphérique dans laquelle sont engagées des tiges filetées (32) qui sont vissées dans la paroi du tube.

9. Dispositif selon la revendication 8, caractérisé en ce que l'extrémité extérieure de la chape (31) est munie d'une fente dans laquelle l'extrémité en forme de fourche du levier (19) est tenue à glissement au moyen d'une goupille (25).

10. Dispositif selon la revendication 9, caractérisé en ce que le levier (19) est relié à l'appareil de filetage (2) de façon démontable à une certaine distance de l'extrémité en forme de fourche, pour l'exécution de l'opération de translation.

Fig.1

# Fig. 2

# Fig. 5

Fig. 3

Fig. 4